# EUROPEAN PATENT SPECIFICATION

(11) **EP 2 962 478 B1**
(45) Date of publication and mention of the grant of the patent: **15.01.2020**
(21) Application number: 14756426.4
(22) Date of filing: 26.02.2014
(51) Int. Cl.: H04W 4/02, G06F 3/14, G09G 5/00, G09G 5/14, H04N 21/41, H04N 21/431, H04N 21/4363, H04N 21/462

(54) **SYSTEM AND METHOD FOR MULTI-USER CONTROL AND MEDIA STREAMING TO A SHARED DISPLAY**
SYSTEM UND VERFAHREN FÜR MEHRNUTZERSTEUERUNG UND DATENSTREAMING AUF EIN GEMEINSAMES DISPLAY
SYSTÈME ET PROCÉDÉ POUR COMMANDE À UTILISATEURS MULTIPLES ET DIFFUSION EN FLUX MULTIMÉDIA À UN AFFICHAGE PARTAGÉ

(30) Priority: 26.02.2013 US 201361769609 P
(43) Date of publication of application: 06.01.2016
(73) Proprietor: Mersive Technologies, Inc., Denver, CO 80205 (US)
(72) Inventor: JAYNES, Christopher O., Denver, CO 80206 (US)
(74) Representative: Abel & Imray
(86) International application number: PCT/US2014/018526
(87) International publication number: WO 2014/134107

(56) References cited:
- CN-A- 102 868 916
- US-A1- 2004 075 671
- US-A1- 2008 034 038
- US-A1- 2008 048 975
- US-A1- 2009 217 177
- US-A1- 2010 169 791
- US-A1- 2010 199 191
- US-A1- 2011 230 134
- US-A1- 2012 173 622
- US-B2- 7 941 828

## Description

### RELATED APPLICATIONS

This application claims priority to U.S. Provisional Patent Application Serial No. 61/769,609 filed February 26, 2013.

There are over 12 million conference rooms worldwide; most are underserved by their current information display solution. Video cables are capable of carrying a single source from one device to a display and, other than physically connecting and disconnecting the video cable, there is little control as to what from that device is displayed when. Video switching hardware overcomes part of this problem by allowing different clients to display to a single screen simultaneously but this hardware is restricted by video transmission standards leaving little control to the users of each device. Finally, screen sharing software offers some capability for users to send images of their devices to a display but these approaches do little more than replace the physical cable with software and, potentially, IP-based networks. What is needed is a system that allows simultaneous interaction for collaboration among multiple users, with the capability of multiple sources, potentially from a single device, being simultaneously published to a common display device that can be controlled from any of the connected devices without restriction.

US2010/169791A1 discloses a Remote Display Protocol (RDP) server, such as a hand-held mobile device, that may control various aspects of a RDP client, such as a large display. For example, if a user wishes to use a RDP system to project the display from their laptop computer onto a large-screen display mounted in a conference room, embodiments of the invention would allow the user to control aspects of the remote client such as location and size.

US2009/217177A1 discloses a method that includes displaying a movable tile on a user's computer screen, the tile being positionable on the computer screen to identify data displayed on the user's computer screen and selected for sharing with one or more remote users. The method further includes transmitting data identified by a position of the tile on the user's computer screen to the remote users, receiving shared data from one of the remote users, and displaying the shared data on the user's computer screen.

CN102868916A discloses a method wherein a mobile terminal can share information with a digital television terminal such that a multimedia file can be browsed or played the digital television terminal and the inconvenience brought by cable connections can be avoided.

### SOLUTION / SUMMARY

The present invention provides a method according to claim 1. Further, optional, features of the method are set-out in the dependent claims.

Embodiments of the present system comprise software that transforms commodity display hardware and a standard compute device connected to that display into a managed, shared presentation and collaboration environment. By providing a common communications, presentation, and management system with software, the display can act as part of public infrastructure, allowing mobile users to connect publish media, share with collaborators, and better communicate. Thus, the present method allows display devices to be used and managed like other aspects of typical IT infrastructure, such as shared storage, printers, cloud-based computing.

Embodiments of the present system also involve software that is installed on a variety of devices that allows them to connect to this display infrastructure. The software provides interconnection of many user display devices and associated media to a single shared display. Users are able to utilize the same display at the same time allowing many different devices, with potentially disparate datasets to be visually compared on the same display. Such embodiments of the present system use a centralized sophisticated state and control management system to enable this type of simultaneous media publishing without the each user display device having manage interaction.

In embodiments of the present system, in addition to selectively publishing media from each user display device to any managed display, users can simultaneously control each media element that has been posted to the shared display. Because the display software transmits state updates to all connected users, each display device can provide the ability to individuals to select and control media that may or may not have been published by that user. Embodiments of the present system, therefore, allow multiple users to share media, collaborate, and communicate freely without restrictions imposed by more traditional video switchers, direct video cabling of each device, or simple screen sharing applications.

As an example of the type of collaboration that the present system makes possible, consider a conference room with a single display that is connected to a commodity PC. Three users each have laptop computers that are connected to a wireless network that is shared by the commodity PC. The present system provides the following behaviors:
- By running the device software and selecting connect via a user interface, each user can establish connection to the display regardless of display resolution mismatches, the absence of a correct video cable of physical connector.
- A user can selectively publish the live output of an application running on their display device. The live image of that application is published the screen.
- A second user can select that image and using interactive, free form controls scale, reposition, and even delete that image from the shared display.
- A third user can select a video file from his/her device and is will appear on the display.
- At the same time the second user can select two different application windows and publish them to the display. Based on user control of presentation layout, all three images may be shown live at the same time, sharing the display screen space appropriately.

In distinction to existing video switching systems, each connected device is both capable of publishing imagery to the shared display and controlling the shared display simultaneously with other devices. Traditional video switching systems provide distinct video-inputs (typically based on existing video standards) that capture, route, and display various video signals. These sources, because they have been passed through a traditional video cable, do not carry extensive control information and, therefore, video sources are unable to control the display. In distinction to video switches, the present system exchanges media (video, imagery, application window pixels), control information, and other metadata (user information, location of source, etc..).

In distinction to software-based screen sharing applications, the present system is capable of providing group control over all published and shared media simultaneously.

In one embodiment, a set of wirelessly enabled display are embedded or attached to a general compute device containing the display software module. Client software modules, installed on at least two different devices allow those devices to wirelessly connect to the display module. The display module can optionally display presence information and metadata about connected users based on the incoming connection signal from the two devices. Each of the users of the devices can then selectively identify a media source to be transmitted to the display for rendering. The display module receives live media streams and simultaneously renders the streams in a position, scale, and with visual effects onto the physical display devices that are controlled by each of the connected users.

### BRIEF DESCRIPTION OF THE DRAWINGS

**Figure 1** is a diagram illustrating exemplary components of the present system;
**Figure 2** is a diagram illustrating exemplary components of the present host display software;
**Figure 3** is a diagram illustrating exemplary components of the present client software;
**Figure 4** is a diagram illustrating an exemplary client display device;
**Figure 5A** is an exemplary diagram illustrating certain relationships between application windows on client display devices and their corresponding images on a shared display device;
**Figure 5B** is an exemplary diagram of an alternative embodiment illustrating certain relationships between application windows on client display devices and their corresponding images on a shared display device;
**Figure 6** is a flowchart showing an exemplary set of steps performed by the present system in connecting to a shared display;
**Figure 7A** is a flowchart showing an exemplary set of steps performed by the present system in publishing to a shared display; and
**Figure 7B** is a flowchart showing an exemplary set of steps performed by the present system in an alternative embodiment, in manipulating application windows on a shared display 102.

### DETAILED DESCRIPTION

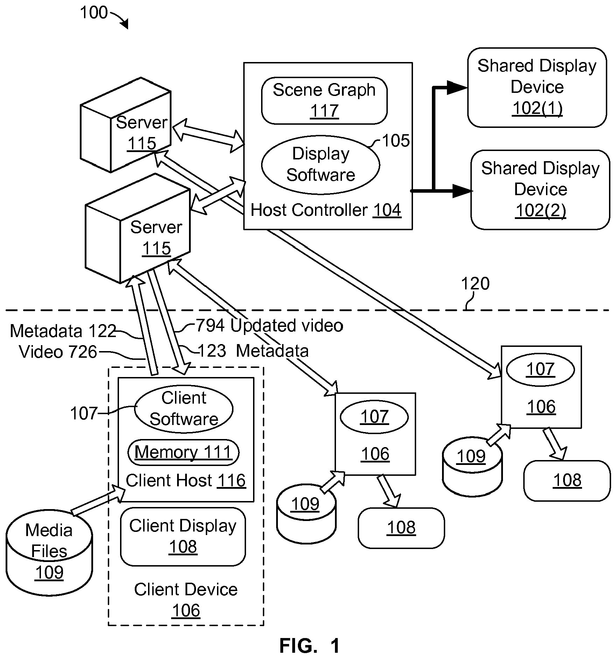

**Figure 1** is a diagram illustrating exemplary components of the present system 100. As shown in Figure 1, in an exemplary embodiment, the present system comprises one of more shared display device 102 (only two devices 102(1) and 102(2) are shown in the figure) controlled by a host controller 104 including display software 105. Host controller 104 is a computer, such as a PC, interconnected, via one or more servers 115, with one or more client host computers 116, each executing client software 107 to control a local display 108 and to also control image display on shared display device 102.

Client hosts 116 include local memory 111 for temporarily storing applications, context and other current information, and may be connected to a local database or other repository of media files 109. Typically, a client host is integrated with a PC, laptop, or a hand-held device such as a smart phone or tablet This integrated client host 116 and display 108 is herein after referred to as "client display device" or simply "client" 106. Dotted line 120 indicates a network interconnection between clients 106 and host shared display 102, which may be wireless or wired.

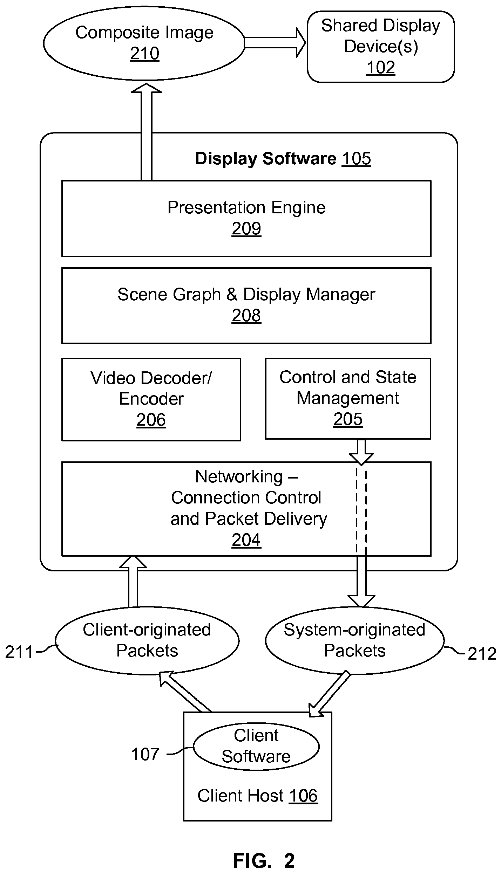

**Figure 2** is a diagram illustrating exemplary components of host display software 105, which controls operation of the present system 100. As shown in Figure 2, in an exemplary embodiment, display software 105 includes networking software 204, control and state management software 205, scene graph and display manager 208, and presentation engine 209.

Networking software 204 provides connection control and packet receipt/delivery of information sent between host controller 104 and clients 106. Networking software 204 receives client-originated packets 212 from, and sends system-originated packets 211 to, client host 116 executing client software 107. Video encoder/decoder 206 encodes/decodes packetized transmitted/received video information.

Control and state management software 205 maintains the global state of the shared display including media streams that have been created by users and each of their unique identifiers, metadata 122 about each user such as their user class geospatial position and user name, and which users are currently expressing control commands. Messages from users invoke updates to the control and state management module to ensure consistent state at all times. In addition, this state is shared periodically with all connected users. In doing so, each connected client is able to see information about all media that has been shared to the display (for example a list of all media posts maintained as thumbnails) and even select and control media originating from other devices.

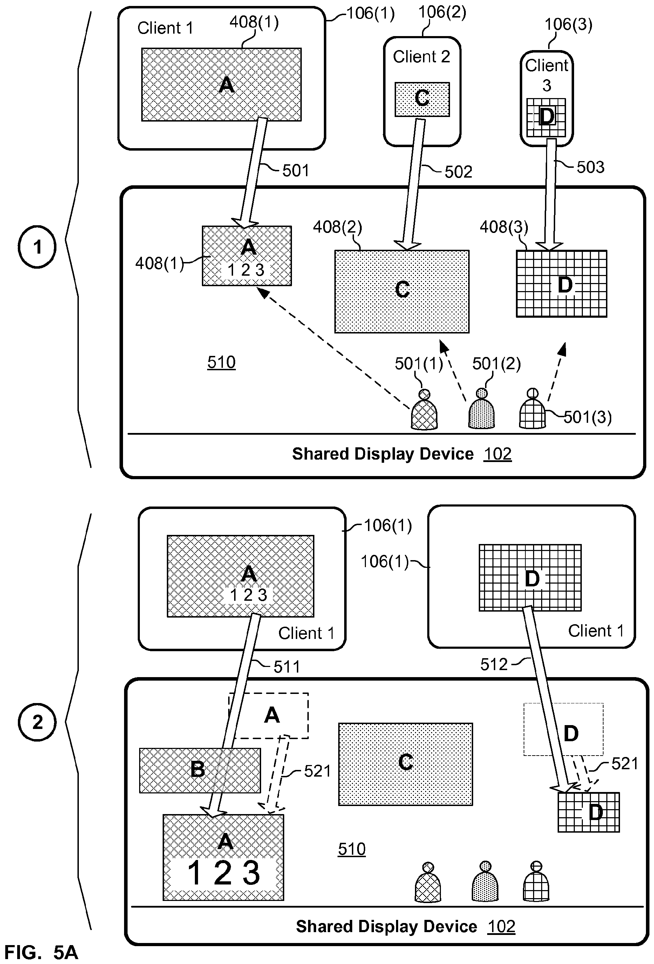

Scene graph and display manager 208 maintains a 3D geometric state of all visual elements displayed on screen 510 of display device 102 (shown in Figure 5A). This includes the position (in 2 or 3 dimensions), scale, and appearance of each media element posted to the display. Actual pixel data, incoming from the video decoder 206 associated with each of these elements, can then be composited into the correct visual position of the corresponding media post based on information stored in the scene graph 117. Scene graph and display manager 208 can be modified by metadata control packets 122 (from clients 106) that include translation commands, scale, and visual effects cues (for example, rotate a media frame to display metadata about that frame rather than the live video of that frame).

Layout control, and other client commands are used to add or remove particular posted media elements from the scene graph 117. For example, a 'presentation' mode command builds a scene graph 117 that includes only a single element whose position and scale is as large as physical constraints of screen 510 permit. Scene graph 117 comprises indicia of the layout of the currently-connected media posts 408 on screen 510 of display device 102. 'Free form' mode builds a scene graph 117, in which all posted media are positioned based on each element's individual placement and scale offsets that can be controlled by users.

Presentation engine 209 takes decoded video (from decoder 206) and interprets the current scene graph 117 into a complete composite display that is rendered as a composite video image 210, which drives one or more shared display devices 102.

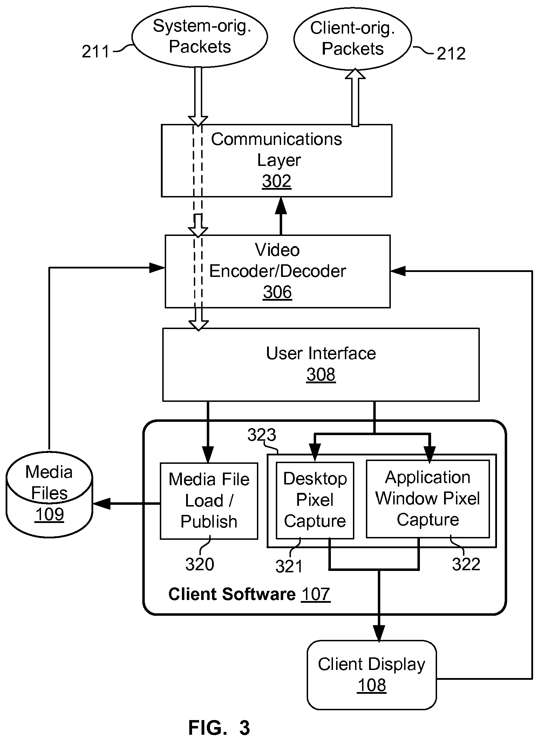

**Figure 3** is a diagram illustrating exemplary components of the present client software 107, which is used by a remote device that contains its own display, such as a tablet computer, laptop computer, smart phone, PC, or the like, to control a user's view on local display 108, as well as the format of the video information displayed on shared display 102.

As shown in Figure 3, in an exemplary embodiment, client software 107 includes a media file module 320 for loading and publishing media files, such as images, videos, and documents. Client software 107 further includes a desktop pixel capture module 321 for capturing desktop pixels on display 108, and an application capture pixel module 322 for capturing application window pixels on shared display 102. Pixel capture module 323 may, alternatively, be integrated into the graphics driver of the client operating system. In this way, generated pixels are "forked" to the capture module directly and the rendering engine generates pixels directly into an appropriate segment of memory.

Media files 109 are encoded and decoded via video encoder/decoder 306 and published by client software 107, to one or more displays 102.

User interface 308 presents control options and global state of the system to a user viewing a local client display 108. For example, buttons to select various layouts of the shared display, and to selectively publish new media are presented. In addition, updates to the global state (when a second user publishes a new media element, for example) are drawn by the user interface to alert the user to the change and to provide control over the newly published element.

Networking layer 302 receives system-originated packets 211 from, and sends client-originated packets 212 to, client host 106 executing client software 107.

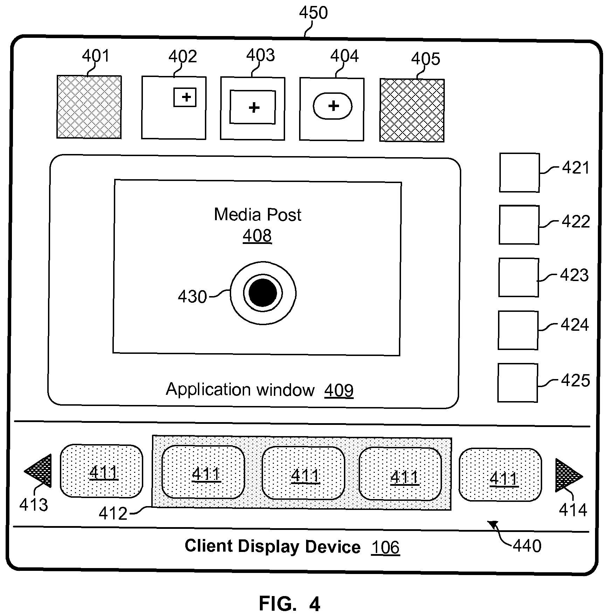

**Figure 4** is a diagram illustrating an exemplary user interface presented on a client display 108, potentially in conjunction with other applications on client display device 106, which can be a handheld device such as a smart phone or tablet, or a laptop or personal computer (PC). As shown in Figure 4, in an exemplary embodiment, client display device 108 includes an application window 409 in which a selected media post 408 is displayed, and a surrounding (or partially surrounding) display area in which various virtual buttons 401-405, 413, 414, and 421-425, are displayed. In an exemplary embodiment, buttons are included for connecting to a list of shared displays [button 401], sharing (publishing) an application window [button 402], sharing the entire client display window 450 [button 403], sharing a client media file [button 404], and disconnecting from the host system [button 405], and also for signaling the display software to change the appearance and layout of the shared display [buttons 421-425].

By selecting buttons 421-425, for example, the client can modify how the (potentially many) different media posts are displayed together. Presentation mode button 421 instructs the shared display to only display the selected media post 408 and to hide all other media posts. Quadmode mode button 422 instructs the server to display the selected element and its three neighbors (as shown in the list of buttons 411 in a regular grid, with each element being the same size). Show All mode button 423 instructs the server to display all elements in a 3D cylindrical grid at a size that allows every post to fit on the scree. FlipBook model button 424 instructs the display software to show the selected element in the foreground of the display at a size that takes up a large portion of the screen, while other media posts are rotated in a perspective mode and rendered as a stack preceding and following the selected element. Free Roam mode button 425 places all the media in their last position and scale defined by all users who are able to position and scale each element individually using the joystick controller 430.

In an exemplary embodiment, the lower section of client display 108 includes a media preview bar 440 which displays thumbnails of media posts sent from display software to clients to allow each client to see, select, and update the system shared state for all published media (including media generated by other clients). Each of the media shaded boxes 412 indicates published media posts currently on shared display 102 based on layout and display settings, i.e., based on signals/video incoming from the server that will alert the client, for example, that the layout has changed to quad-view (4 items on the screen). Posts that are not currently covered by the shared box 412 are not visible on the screen based on the current layout settings but remain part of the shared display session, continue to be updated live, and can be brought into view on the shared display though user selection and control. Buttons 413 and 414 allow a user to scroll through the published media entries in media preview bar 440, potentially bringing each of the media posts corresponding to the thumbnails into view on the shared display.

For example, in presentation mode only one element is displayed on the shared screen at any given moment, in this case, box 412 covers only a single element (media post). By using arrows 414 and 413 to rotate the thumbnail's preview windows of the various published elements, the elements 'slide' into area 412 and a message is transmitted to the display software to modify what is being displayed to correspond to the new thumbnail that is now in area 412.

In an exemplary embodiment, media preview bar 440 also allows users to select any shared media post by left clicking the corresponding thumbnail. The selected media element is then drawn as a large preview into window 409 and can be controlled via a user input device such as a joystick 430. Free-form control ('virtual') joystick 430 is a software-generated image that acts as a user input device which allows a user to position and scale media and other types of images displayed in application window 409.

**Figure 5A** is an exemplary diagram of an alternative embodiment illustrating certain relationships between application windows 409 on client display devices 106(*) [where "*" is a wild card indicator representing any member of a class of related items] and their corresponding images on shared display device 102. As shown in the example of Figure 5A, initially (as indicated in frame 1 at the top of the figure), display device 106(1) for client 1 is displaying media post 408(1), labeled "A", display device 106(2) is displaying media post "C" 408(2), and display device 106(3) is displaying media post "D" 408(3), as indicated by arrows 501--503. In the present embodiment, users of devices 106(1)-106(3) are local to display device 102 and can see screen 510.

As indicated in the left-hand half of frame 2, client 1, using device 106(1) may, for example, (1) move media post A below window B (as indicated by arrow 521), and, as indicated by arrow 511, (2) resize window A, and also (3) enlarge or 'zoom in on' window A, by manipulating window A on client device 106(1). As indicated in the right-hand half of frame 2, a user of device 106(1) may move (arrow 521), and as indicated by arrow 512, may resize or zoom in on another client's window, observing that window D was posted (published) by client 3 via device 106(3). Any of the above actions by different users may occur simultaneously.

Icons 501(1) - 501(2) presented on display device 102 represent currently-connected clients/users.

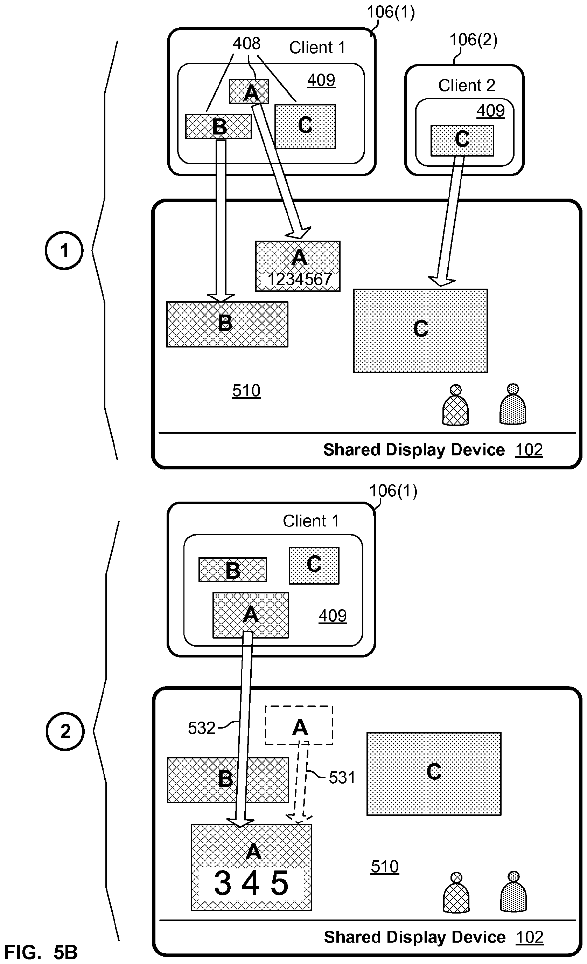

**Figure 5B** is an exemplary diagram of an alternative embodiment illustrating certain relationships between application windows shown on a shared display device 102 and corresponding images on local and remote client display devices 106(*). As shown in the example of Figure 5B, initially (as indicated in frame 1 at the top of the figure), shared display device 102 is displaying media posts from remote client 106(1) and also from local client 106(2) (clients 1 and 2). Media posts A and B were published by client 1, and media post C was published by client 2.

As shown in frame 1 of Figure 5B, local client device 106(2) displays only window C, while remote client device 106(1) displays an image of the entire shared display screen 510 in application window 409, which is the application currently posted by client 2. Thus, display device 106(1) for client 1 is displaying media posts 408, labeled "A". "B", and "C", in the same format as is displayed on display 102. In the present embodiment, a "remote" user of a devices 106(*) is typically connected to server 115 via the Internet (or a private network) and may be sufficiently remote from display device 102, such that the user cannot see screen **510** of the display 102.

As indicated in frame 2, client 1, using device 106(1) may, for example, (1) move media post A below window B (as indicated by arrow 531), (2) resize window A, as indicated by arrow 532, and also (3) enlarge or 'zoom in on' window A, by manipulating window A on client device 106(1), as described above.

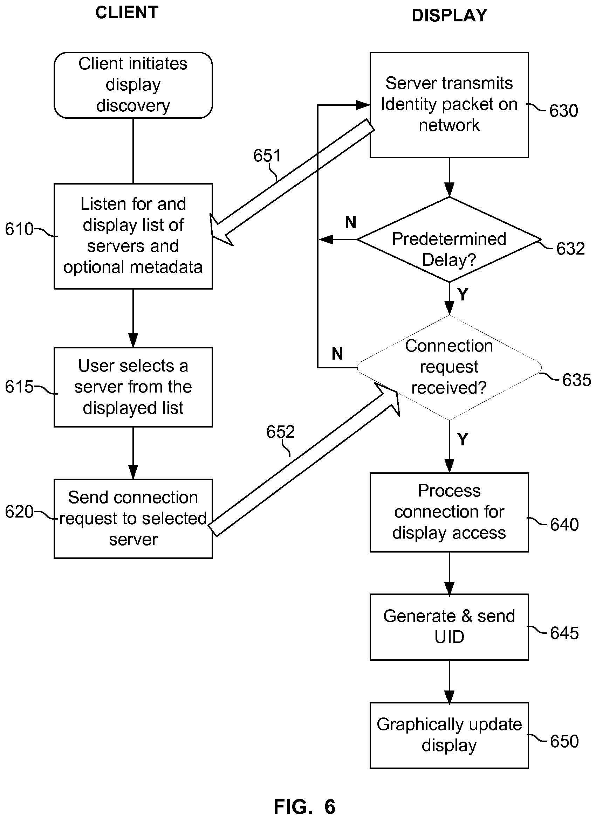

**Figure 6** is a flowchart showing an exemplary set of steps performed by the present system in connecting to a shared display. As shown in Figure 6, at step **630**, host display software 105 transmits identity packets 651 containing access information about display 102 and its configuration on the local network. In an exemplary embodiment, identity packets 651 contain information about the server that enables connection setup (port number, IP address, etc.) as well as optional metadata 123 including server name, number of users connected, idle time, and security and authentication information (e.g., whether a password is required, what user class can connect).

At step **610**, a client 106(*) initiates display discovery by detecting identity packets 651 and examining the packet data to determine what servers 115 and corresponding displays 102 are available on the network. At step **615**, a user selects a shared display 102 from a list of available severs/ host displays on the local network.

At step **620**, a connection request packet 652 containing user access information is transmitted by client to the selected server 115. As indicated by block **632**, after a predetermined delay, host server 115 continues to check for a connection request packet 652 from client 106, at step **635**. When the request packet 652 is received, server 115 responds with a packet indicating that access is granted, or in the case where the server was configured for password access, responds with a packet that requests a password. Process connections between server 115 and clients 106 occur in a separate and parallel process so that multiple connection requests can be published at the same time.

At step **640**, the present connection is processed for display access by updating the display software control and state management module 205 to reflect that the display has accepted a new user. At step **645**, a unique user ID (UID) 646 is generated, and visual information about that user is updated, for example, a unique identifying color and icon is selected that reflects information about that user including client host hardware type, physical location, and connection type. This information can be rendered to the display to visually notify other users proximate to the display. The UID 646 is then sent to client 106. At step **650**, display 102 is graphically updated to reflect video data published by client 108 to the display.

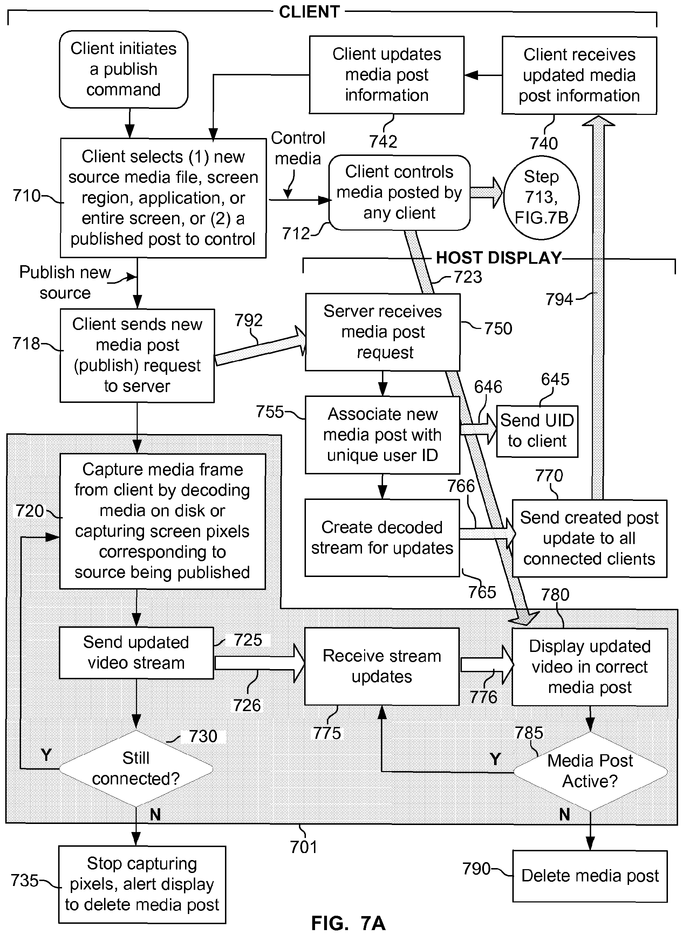

**Figure 7A** is a flowchart showing an exemplary set of steps performed by the present system in publishing to a shared display 102. As shown in Figure 7A, at step 710, client 106(*) initiates a publish command by clicking an entry in the media preview bar 440 to select either (1) a new source media file or application stored in media files 109, a screen region, or the entire screen; or (2) an already-published post to control on display 102.

If a publish command was selected, then at step **718,** client 106 sends a new media post (publish) request 792 to server 115. At step **720**, a media frame 726 is captured by client pixel capture module 323 by decoding media on disk or capturing screen pixels corresponding to the source (media, application, screen area) being published. At step **725**, the updated video frame 726 is sent to server 115 and host 104, as long as the connection remains established (step **730**). If the client-host connection is dropped, then pixel capture is terminated and a message is sent to host 104 indicating that the present client's media posts are to be deleted, at step **735.**

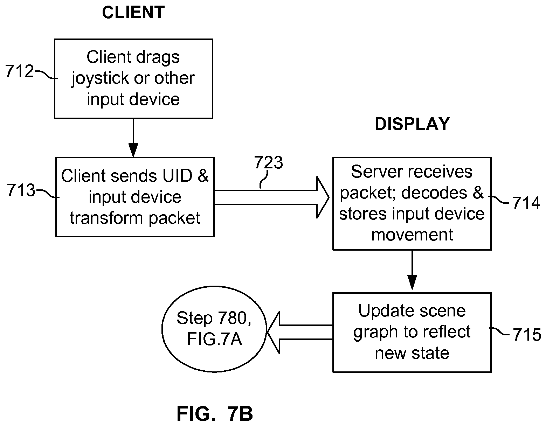

If a media control command was selected at step 710, then at step **712**, client 106 initiates control of an media post presently posted by any client 106(*). Control flow continues as shown in Figure 7B, at step 713, described below.

At step **750**, server 115 receives media post request packet 792. At step 755, display software 105 creates a unique identifier (UID) 646 that it associates with the newly created window 408. At step **765**, server 115 creates a decoded video stream 766 for updates. At step **770**, host server 115 sends client 106 an update 794 including additional display state information, including the media streams (and their UIDs) that have been posted, and the number of users connected.

At step **645** (per Figure 6), server 115 sends UID 646 to client 106 to acknowledge the creation of a new media post. At step **775**, host server 115 receives video stream 726 from client 106 via the networking layer and, based on its type, decodes the data via video encoder/decoder module 206 to create a pixel data frame 776.

At step **780**, display software draws the pixel data frame into the current position, scale, offset of the media post (as indicated by scene graph 117) to create a visible frame on display 102 that corresponds to the application view that was captured on client device 106.

At step **740**, client 106 receives the update including the additional display state information and updates/stores the information at step **742**.

At this point, client 106 returns to step 710, and may either publish another window (and continue with the above set of steps) or move joystick (or other user input device) 430, at step 712, and continue as indicated below in the description of Figure 7B.

Steps in shaded area 701 (steps 720, 725, 730, 775, 780, 785) are performed asynchronously. Continued messages from a client 106 that contain a video stream are also received in parallel by the networking layer and are decoded by the video decoder module 206 to create pixel updates that are drawn into the new position of the shared media post on display 102. If a media post ceases to be active (step **785**), then the media post is deleted from display 102, at step **790**.

**Example 1**: In this example, two users, A and B, use the present method to simultaneously share and control a shared display 102. In this example, host display software 105 is run on a PC 104 connected to the shared display. The PC is on a local network with client devices 106 A and B.

[Step 710] User A [using client display 106(1)] selects a media post control option, and selects an application or media to publish to the host display.

[Step 718] User A selects "publish" from its interface control panel and transmits a request to the host to add a new media post to (i.e., publish) the shared display.

[Steps 720 - 725] Client A begins transmitting a video stream 726 corresponding to the encoded data for the media post.

[Step 750] Server receives publish request.

[Step 755] Shared display software creates a unique identifier (UID 646) that it associates with the newly created window, and [step 645] then sends this UID to user A to acknowledge the creation of a new media post.

[Step 775] Host server 115 receives the video stream from client A via the networking layer and, based on its type, decodes the data via video encoder/decoder module 206 to create a pixel data frame 776.

[Step 780] The pixel data frame is then drawn into the current position, scale, offset of the media post to create a visible frame on display 510 that corresponds to the application view that was captured on client A.

[Step 770] Host server 115 sends client A and other connected clients an update including additional display state information, including new media streams (and their UIDs 646) that have been posted, and the number of users connected.

[Step 740] Client A receives the update including the additional display state information and updates/stores the information [Step 742].

At this point, client A returns to step 710, and may either publish another window (and continue with the above set of steps) or move joystick (or other user input device) 430, at step 712, and continue as indicated below. Client B connects to the shared display using a similar set of steps as described above for client A.

[Step 740] Client B receives the update to the user interface via state update packets that now contain information including media post UIDs 646 and corresponding video frames being shown on the host display 102 (from step 770).

[Step 710 with different selection] User B selects a media post UID 646 by clicking an entry in the media preview bar 440.

[Step 712] Dragging the joystick initiates a message, sent to server 115, [at step 713] that includes:
(1) a transform (i.e. translation) and
(2) the unique identifier [UID 646] of the media post being manipulated

[Step 714] The server receives this packet and decodes it using the control and state management module 205. The state of the server (stored in this module) is updated to reflect the movement that was just applied to a particular UID 646.

[Step 715] The scene graph 117 is updated to graphically depict the new state.

[Step 780] Presentation engine 209 then draws the new scene according to the new graphical state of media.

**Figure 7B** is a flowchart showing an exemplary set of steps performed by the present system in an alternative embodiment, in manipulating media posts on a shared display 102. As shown in Figure 7B, at step **713**, as indicated by arrow 723, dragging joystick 430 (or other input device) initiates a message, sent to server 115, that includes a packet 723 containing (1) a transform (i.e., translation magnitude and direction based on the motion of the user input joystick) and (2) the unique identifier [UID] 646 of the media post being manipulated.

At step **714**, host 104 receives packet 723 from client 106, decodes the packet, and applies the transform to the current geometric and visual appearance state of the correct media element. In this example, a media element is translated by applying the translation to the current position, stored in the control and state manager 205 for that element. At step **715**, scene graph 117 is updated to graphically depict the new state of display 102. Finally, the presentation engine 209 interprets the entire scene graph 117 that holds information about the visual appearance of all media elements, including the one that was just updated, and creates a composite image 210 for the display 102. Control resumes at step 780 in Figure 7A.

**Example 2:** Two users, A and B, using the present method to connect and simultaneously share and control a display:

Host display software is run on a PC connected to the shared display. PC is on a local network with client devices A and B. Host display software begins transmitting discovery packets containing access information about the display and its configuration on the local network.
1. Client A connects to the host display software by detecting the discovery packets that are available on the network and presenting them for a user to select. User A selects the shared display from a list of available host displays on the local network.
2. A connection packet is transmitted to the display software containing user access information.
3. Server 115 receives that packet and responds with access granted -or- in the case that the server was configured for password access, a packet that requests a password.
4. Server sends client A an update including additional information about the state of the display, including the media streams (and their UIDs) that have been posted, and how many users are connected.
5. Client A receives [and stores] access granted and the update including the additional display state information.
6. Client A updates its user interface to reflect the state of the shared display
7. User A selects "publish" from an interface control panel and subsequently selects a media post to publish to the display.
8. User A transmits a message to the display to add a new media post to the shared display that is initially sized based on the application window size.
9. The shared display software creates a unique identifier (UID) that it associates with this newly created window.
10. The shared display then transmits this unique identifier to User A to acknowledge the creation of a new media post.
11. Client A then attaches a pixel capture mechanism to the selected media post and begins capturing pixel data, which is passed to the video encode engine.
12. Client A sends a message to the display that associates a "video stream" type with the UID.
13. Client A begins transmitting a video stream corresponding to the encoded data for the media post.
14. Server 115 receives the video stream via the networking layer and, based on its type, decodes the data via the video decoder module to create a pixel data frame.
15. The pixel data frame is then drawn into the current position, scale, offset of the media post to create a visible frame that corresponds to the application view that was captured on Client A. This new media post is drawn in a position, scale, offset, and with other special effects (border, no border) based on the current display layout and other rules according to the scene graph and current state.
16. Client B connects to the shared display using a similar set of steps as described above for client A.
17. Client B receives the update to the user interface via state update packets that now contain information about media post UID and a corresponding video frame that is being shown on the server.
18. User B selects media post UID by clicking an entry in the media preview bar at the bottom of the user-interface.
19. User B selects the joystick to control the position/scale of media post UID.
20. By dragging the joystick, a message is sent to the server that contains:
   a. A transform (i.e., joystick translation magnitude and direction based on the motion of the user input joystick), and
   b. The unique identifier [UID] of the media post being manipulated.
21. Server 115 receives this packet and decodes it using the control and state management module 205. The state of the server (stored in this module) is updated to reflect the movement that was just applied to a particular UID.
22. The scene graph is updated to graphically depict the new state of the various media posts/selected layout, to draw the media post at a position and scale, with effects as indicated by the new state.
23. The presentation engine 209 then draws the new scene according to the new graphical state of media UID.

The above description of certain embodiments of the invention is not intended to be exhaustive or to limit the invention to the precise forms disclosed. The terms used in the claims should not be construed to limit the invention to the specific embodiments disclosed in the specification, rather, the scope of the invention is to be determined by the following claims.

## Claims

1. A method for simultaneously displaying, on a shared display (102), at least one media source from each of at least two of a plurality of client devices (106), the shared display (102) being remote from the client devices (106), the method comprising:
a) wirelessly connecting two or more of the client devices (106) to the shared display (102);
b) selecting, via each of the client devices (106), a respective media source wherein the media source comprises at least one of a media file stored on the respective client device, an application stored on the respective client device and a screen area of the respective client device; and
c) receiving, from any of the client devices (106), a transform, indicating translation magnitude and scale based on settings of a user input device, for any of the media sources, indicating the location and size, on the shared display (102), of each said media source;
d) transmitting each of the selected media sources to the shared display (102) as a respective live media stream;
wherein the live media stream comprises media frames resulting from decoding the media file or from capturing pixels corresponding to the screen area or application output; and
e) simultaneously rendering, on the shared display (102), each of the transmitted live media streams, using the transform to determine a current geometric state of each of the respective media sources; and
where it is possible for at least one first client device to select another media source, distinct from the first selected media source via said first device, and performing the steps c) to e) of the current method.

2. The method of claim 1, wherein the media file is an image file.

3. The method of claim 1, wherein the media file is one or more data files.

4. The method of claim 1, wherein the client devices (106) connecting to the display transmit information to the display including user identity and media location on the display.

5. The method of claim 1, the live media stream including state information of the shared display (102).

6. The method of claim 1, the transform including a manipulation of the live media stream of the shared display (102) on the client device (106).

## Patentansprüche

1. Verfahren zum gleichzeitigen Anzeigen von mindestens einer Medienquelle von jeder von mindestens zwei von mehreren Kundengeräten (106) auf ei - ner gemeinsam genutzten Anzeige (102), wobei die gemeinsam genutzte Anzeige (102) entfernt von den Kundengeräten (106) vorgesehen ist, wobei das Verfahren folgende Schritte aufweist:
a) drahtloses Verbinden von zwei oder mehr der Kundengeräte (106) mit der gemeinsam genutzten Anzeige (102);
b) über jedes der Kundengeräte (106) erfolgendes Auswählen einer jeweili - gen Medienquelle, wobei die Medienquelle mindestens eines von einer auf dem jeweiligen Kundengerät gespeicherten Mediendatei, einer auf dem je - weiligen Kundengerät gespeicherten Anwendung sowie einem Bildschirm - bereich des jeweiligen Kundengeräts aufweist; und
c) von einem beliebigen der Kundengeräte (106) erfolgendes Empfangen einer Transformation, die eine Translationsgröße und einen Translations - maßstab auf der Basis von Einstellungen einer Benutzereingabevorrichtung für jede der Medienquellen angibt, wobei der Ort und die Größe jeder Me - dienquelle auf der gemeinsam genutzten Anzeige (102) angegeben wer - den;
d) Übertragen von jeder der ausgewählten Medienquellen als jeweiligen Live-Medienstrom zu der gemeinsam genutzten Anzeige (102);
wobei der Live-Medienstrom Medienrahmen aufweist, die aus einer Deco - dierung der Mediendatei oder aus dem Aufnehmen von Pixeln resultieren, die der Bildschirmfläche oder einem Anwendungsausgang entsprechen; und
e) gleichzeitiges Rendern jeder der übertragenen Live-Medienströme auf der gemeinsam genutzten Anzeige (102) unter Verwendung der Transformation, um einen aktuellen geometrischen Zustand jeder der jeweiligen Me - dienquellen zu bestimmen; und
bei Möglichkeit, dass mindestens ein erstes Kundengerät über die erste Vorrichtung eine andere Medienquelle auswählen kann, die von der ersten ausgewählten Medienquelle verschieden ist, und Ausführen der Schritte c) bis e) des aktuellen Verfahrens.

2. Verfahren nach Anspruch 1,
wobei die Mediendatei eine Bilddatei ist.

3. Verfahren nach Anspruch 1,
wobei die Mediendatei eine oder mehrere Datendateien ist.

4. Verfahren nach Anspruch 1,
wobei die mit der Anzeige in Verbindung tretenden Kundengeräte (106) In - formation zu der Anzeige übertragen, die die Benutzeridentität und den Me - dienort auf der Anzeige beinhalten.

5. Verfahren nach Anspruch 1,
wobei der Live-Medienstrom Statusinformation der gemeinsam genutzten Anzeige (102) beinhaltet.

6. Verfahren nach Anspruch 1,
wobei die Transformation eine Handhabung des Live-Medienstroms der ge - meinsam genutzten Anzeige (102) auf dem Kundengerät (106) beinhaltet.

## Revendications

1. Procédé d'affichage simultané, sur un affichage partagé (102), d'au moins une source multimédia provenant de chacun d'au moins deux dispositifs clients parmi une pluralité de dispositifs clients (106), l'affichage partagé (102) étant distant des dispositifs clients (106), le procédé comprenant les étapes ci-dessous consistant à :
a) connecter, par voie hertzienne, deux des dispositifs clients (106) ou plus, à l'affichage partagé (102) ;
b) sélectionner, par l'intermédiaire de chacun des dispositifs clients (106), une source multimédia respective dans laquelle la source multimédia comprend au moins un élément parmi un fichier multimédia stocké sur le dispositif client respectif, une application stockée sur le dispositif client respectif, et une zone d'écran du dispositif client respectif ; et
c) recevoir, en provenance de l'un quelconque des dispositifs clients (106), une transformation, indiquant une amplitude et une échelle de translation sur la base de paramétrages d'un dispositif d'entrée utilisateur, pour l'une quelconque des sources multimédias, indiquant l'emplacement et la taille, sur l'affichage partagé (102), de chaque dite source multimédia ;
d) transmettre chacune des sources multimédias sélectionnées à l'affichage partagé (102), en tant qu'un flux multimédia en direct respectif ;
dans lequel le flux multimédia en direct comprend des trames multimédias résultant du décodage du fichier multimédia ou de la capture de pixels correspondant à la zone d'écran ou à une sortie d'application ; et
e) rendre simultanément, sur l'affichage partagé (102), chacun des flux multimédias en direct transmis, en utilisant la transformation en vue de déterminer un état géométrique en cours de chacune des sources multimédias respectives ; et
dans lequel il est possible, pour au moins un premier dispositif client, de sélectionner une autre source multimédia, distincte de la première source multimédia sélectionnée, par l'intermédiaire dudit premier dispositif, et mettre en œuvre les étapes c) à e) du procédé en cours.

2. Procédé selon la revendication 1, dans lequel le fichier multimédia est un fichier d'image.

3. Procédé selon la revendication 1, dans lequel le fichier multimédia correspond à un ou plusieurs fichiers de données.

4. Procédé selon la revendication 1, dans lequel les dispositifs clients (106) se connectant à l'affichage transmettent des informations à l'affichage, notamment l'identité de l'utilisateur et la position du contenu multimédia sur l'affichage.

5. Procédé selon la revendication 1, dans lequel le flux multimédia en direct inclut des informations d'état de l'affichage partagé (102).

6. Procédé selon la revendication 1, dans lequel la transformation inclut une manipulation du flux multimédia en direct de l'affichage partagé (102) sur le dispositif client (106).
